# EUROPEAN PATENT SPECIFICATION

(11) **EP 3 859 485 B1**
(45) Date of publication and mention of the grant of the patent: **06.03.2024**
(21) Application number: 20154172.9
(22) Date of filing: 28.01.2020
(51) Int. Cl.: G05D 23/19

(54) **ADAPTIVE BOILER CONTROL**
ADAPTIVE KESSELREGELUNG
COMMANDE DE CHAUDIÈRE ADAPTATIVE

(43) Date of publication of application: 04.08.2021
(73) Proprietor: Pittway Sarl, 1180 Rolle (CH)
(72) Inventor: HURST, Andrew, 1180 Rolle (CH); BRYCE, Alistair, 1180 Rolle (CH)
(74) Representative: Murgitroyd & Company

(56) References cited:
- WO-A2-2006/041599
- US-A1- 2016 305 678
- US-A1- 2017 211 837

## Description

### TECHNICAL FIELD

The present disclosure relates to a method of controlling an output of a boiler. The present disclosure also concerns a heating system comprising a boiler, a zone, and a control system. Introduction of background art

The invention is set forth in the independent claims 1 and 14 and in the dependent claims 2 to 13. A common method of controlling a boiler in a heating system is to take the maximum heating demand from a single zone and send this to the boiler, so that the boiler supplies the heat required to satisfy the zone.

In most heating systems, the boiler has a maximum output that can be significantly more than the output required for any single zone. Therefore, if the boiler is operating to satisfy a maximum heating demand, a lot of heat and energy can be wasted.

The internal water temperature set-point is typically the variable controlled in on/off boilers. This is often controlled by the boiler itself. Modern heating apparatuses that form part of the heating system will also have their own zone temperature set-points for their specific zone, which is controlled by a logic circuit.

A thermostatic radiator valve (TRV) limits the input into the heating apparatus (such as a radiator) so that the temperature of the zone approaches the zone temperature set-point.

However, the heating apparatus control is independent of the external control system and the central heating load. The control is typically unique to the make and model of the appliance and is not typically known by the external controls.

In an example heating system of the prior art, an 'on' signal results in the boiler trying to deliver all of its output to a portion of the total heating load (i.e. to a portion of all the heating apparatus). The boiler limits flow water temperature but there is no feedback mechanism to restrict the heat input rate.

The boiler instantaneous heat input rates are unknown by the room temperature controls. On the other hand, the central heating system size and the required heat input rate is unknown by the boiler.

Given the power output of the boiler tends to be much larger than the system's ability to dissipate heat, the water temperature increases at a faster rate than is optimal for efficient use of energy. The rapid temperature rise increases the temperature of the water returning to the boiler and this also reduces the efficiency of the boiler. This is partly because the heat of the flue gases cannot be efficiently heat exchanged with the returning water as the temperature of the returning water is greater than the dew point of the flue gases.

Rapid cycling of the burner also increases the standby losses of the boiler, resulting in a more inefficient system.

Often, when radiators are installed in a heating system, they are not sized correctly for the heating requirements of the zone. The temperature difference across a radiator can be sub-optimal, and may raise the return temperature.

Control systems of the prior art will cycle the firing rate of the boiler in order to match the heat loss of the zone with the highest demand.

A problem with the prior art approach is that the 'size' of the zone is not accounted for. A large zone will be treated equally to a small zone if they both require the same average rate of heat input.

Moreover, the heat requirement of a zone may change in dependence on external factors such as external temperature, and season. The prior art tends not to account for these factors when assessing the load required for a zone. This can lead to either over- or under-heating. The external factors also change over time, and may be different between each heating cycle (for example the external temperature may be different at midday compared to in the evening), which can also lead to incorrect heating of the zones.

US2016305678A1 (PAVLOVSKI et al) discloses a method for controlling temperature in a thermal zone within a building, comprising: using a processor, receiving a desired temperature range for the thermal zone; determining a forecast ambient temperature value for an external surface of the building proximate the thermal zone; using a predictive model for the building, determining set points for a heating, ventilating, and air conditioning ("HVAC") system associated with the thermal zone that minimize energy use by the building; the desired temperature range and the forecast ambient temperature value being inputs to the predictive model; the predictive model being trained using respective historical measured value data for at least one of the inputs; and, controlling the HVAC system with the set points to maintain an actual temperature value of the thermal zone within the desired temperature range for the thermal zone..

The present disclosure seeks to mitigate the above-mentioned problems. Alternatively or additionally, the present disclosure seeks to provide an improved method of controlling a boiler.

### SUMMARY

The present disclosure provides, according to a first aspect, a method of controlling a power output of a boiler, preferably an on/off boiler, to a heating apparatus located in a zone. The method comprises the step of receiving a heating demand signal from the zone. The method also comprises the step of deriving the boiler power output based on the heating demand signal and also based on a scaling factor for the zone. The method also comprises the step of controlling the boiler to generate the boiler power output. The scaling factor has been calculated based on the steps of: (i) measuring the rate of temperature increase in the zone under a plurality of different boiler power outputs; and (ii) using the measurements in step (i), to learn the magnitude of the scaling factor to be applied for achieving a desired design rate of temperature increase in the zone.

In embodiments of the present disclosure, the boiler receives a heating demand signal that represents the amount of heat that is required by the zone. The boiler power output is derived as a function of the heating demand signal and the scaling factor for the zone. The scaling factor may allow for the size of the zone to be factored in to the derivation, or adjust for an external load factor (such as external temperature, for example). It is then the boiler that is controlled to provide a controlled boiler power output.

Embodiments of the present disclosure have been found to be advantageous:
Firstly, controlling the boiler power output has been found to be particularly beneficial. For example, the boiler power output can be directly related to external load factors and the heating demand of the heating apparatus. In the prior art, the control of the flow through the heating apparatus tends to be controlled independently from the control system for the boiler. This means that the room temperature controls of the prior art may not know the boiler heat input rates (as they are concerned about the zone temperature set-point), and the boiler may not know the heating system size or heating demand. This often results in heating up too quickly (as the boiler has a much higher capacity than a single heating apparatus). Examples of the prior art may also overshoot the temperature set-point, which may cause high return water temperatures and inefficiencies in standby losses of the boiler through rapid cycling. Embodiments of the present disclosure recognise that by controlling the power output of the boiler, the heat provided to the heating apparatus from the boiler can more accurately reflect the true heat requirement of the zone.

The average power output of the boiler may be controlled. The instantaneous power output of the boiler may not be controlled. This may be because the boiler may only either be 'on' or 'off'. In this case, the power output of the boiler in the 'on' state is predetermined, but the average output of the boiler (over a long period of time - in the order of minutes) can be controlled by controlling the duration of 'on' and 'off' periods.

The boiler being an on/off boiler advantageously means that the control of the system is simpler. The power output of the boiler may be known when the boiler is in an on state. For example, the boiler may have an output rated at 28 kW in the 'on' state. Therefore, the length of time that the boiler is on may be controlled to match the calculated output of the boiler. For example, if the calculated power output of the boiler is required to be an average 14 kW, then the boiler would spend half the time in the 'on' state and half the time in the 'off' state. The boiler power output may be a required output averaged over a time period longer than a second. For example, the average boiler power output may be the mean average power output over an hour long period. In the above example, the boiler may cycle between 5 minutes in the 'on' state and 5 minutes in the 'off' state, thus providing an average of 14 kW over the hour. This is advantageous as heating losses are incurred with too rapid cycling of the boiler, particularly in the standby periods. Having longer cycling periods mitigates such losses.

The boiler is controlled to generate a boiler power output that is arranged to achieve a desired design rate of temperature increase in the zone.

The desired design rate of the heating apparatus is the rate of temperature increase in the zone when the heating apparatus is correctly sized for the zone and operating under design conditions. Aiming for the design rate of temperature increase of the zone tends to reduce the effect of problems associated with the boiler having a significantly higher rating than the heating apparatus. Aiming for temperature set-points (by use of delta T approaches for example) often overheats the zone as the maximum boiler power output is so large, and thus heat losses are incurred during temperature overshoots.

The desired design rate of the heating apparatus may be the best control that is achievable from the zone. In some situations, the desired design rate of temperature increase may not be achievable for the heating apparatus provided in the zone. In these situations, the rate of heat input provided to the heating apparatus may aim for the best rate of temperature increase possible. This may be slightly lower that the maximum rate of temperature increase that is possible, but increases the efficiency of operation. It is inefficient to provide more heat to the heating apparatus than its maximum power rating (which is very possible given that the boiler has a rating that is significantly greater than the heating apparatus).

In embodiments of the present disclosure, the step of deriving the power output of the boiler is based on the heating demand signal and a scaling factor. The calculation of the scaling factor comprises two steps. Firstly, the rate of temperature increase of the zone is measured under a plurality of different boiler power outputs. These measurements are then used to learn the magnitude of the scaling factor to be applied in order to achieve a desired design rate of temperature increase in the zone.

Measuring the rate of temperature increase under a plurality of boiler power outputs enables the system to gather data on how the rate of temperature rise of the zone responds to different boiler power outputs under different heating demand signals. If the rate of temperature increase is too high, for example, then under those conditions the scaling factor would have been too high.

Learning the magnitude of the scaling factor enables the heating system to accurately predict the required power output of the boiler for different conditions and/or parameters. For instance, such conditions and/or parameters may be: the season, the external temperature, the internal temperature, the humidity, the size of the room, the power of the radiator, and/or the rate of heat loss of the room at design conditions. Additionally and advantageously, with each new data point, the system may improve the accuracy of the step of deriving the boiler power output, such that the boiler power output more accurately corresponds to the heat requirement of the zone to operate at design conditions (i.e. experience the desired design rate of temperature increase). The learning process, for example, may allow the control system to predict how much the scaling factor needs to be adjusted for a particular temperature difference between the zone temperature and the zone target temperature. The learning process may allow the control system to predict how much the scaling factor needs to be adjusted for particular external temperature/seasonal conditions.

It has been found that the combination of controlling the boiler power output and using a learnt scaling factor is especially beneficial. Controlling the boiler power output enables efficient heating, whilst the learnt scaling factor in combination enables the system to provide a suitable, efficient, level of heating under a variety of conditions.

The power output of the boiler is preferably measured in the units of energy per unit of time. The power output may be measured in kilowatts (kW). The required/controlled power output may be an average power output. The maximum or rated power output of the boiler is the power when the boiler is on 100% of the time. The average power output may include times when the boiler is in an 'off' state.

Advantageously, controlling the power output of the boiler means that it is easier and more reliable to match the output of the boiler to the required heating demand of the zone. Therefore, when the boiler power output is controlled, it can more accurately match the heating requirement of the zone.

In the prior art, it may be only temperature set-points that are aimed for by the control system. This approach does not know or consider what the heating losses are for a zone, or the size of the zone, in addition to the heating requirement to elevate the temperature of the zone. Therefore, this can lead to under-heating if the losses are not adequately compensated for. Conversely, in other approaches of the prior art, the maximum amount of heat may be supplied to the zone to reach the temperature set-point. This risks overshooting the target zone temperature, and results in rapid cycling of the boiler which leads to inefficiencies and heat losses as mentioned above. Controlling the power output of the boiler reduces the risk of overshooting, as the power output can be matched to the heating requirement of the zone (for example by also using the learnt scaling factor described herein) .

The heating demand signal may be represented as a percentage of the maximum heating demand for the zone. The maximum heating demand may correspond to the maximum power rating of the heating apparatus. For example, a radiator may have a heat requirement of 500 Watts at maximum load. If only 20% of the maximum is required, then the heating demand signal may be 20% for example.

The heating demand signal percentage may comprise a value representing how open a valve is, the valve being fluidly connected to the heating apparatus. If the valve is fully open, it may represent a 100% demand for heat for that heating apparatus.

In the above examples, the control system is able to communicate with the control system of the zone to determine how much heat the zone is demanding. The control system additionally applies the learnt scaling factor to more accurately reflect the heating requirement of the zone.

Use of how open the valve is, to represent the heating demand, is beneficial in that a thermostatic valve already knows how open the valve is and can supply this information to a central thermostat or control unit. The control unit may be in the thermostat.

The step of controlling the boiler may comprise setting a duty cycle of the boiler.

The duty cycle of the boiler may be switching the boiler between on and off states at specified time intervals. For example, the boiler duty cycle may take the form of 10 minutes in the 'on' state followed by 10 minutes in the 'off' state. According to embodiments of the present disclosure, the time intervals are shorter or longer than 10 minutes, and may be 5 minutes, or 15 minutes for example. Advantageously, this allows a boiler that comprises an 'on' state and an 'off' state to have a continuous range of average power outputs. The continuous range of power outputs can be achieved by varying the ratio of time during which the boiler is in the 'on' state relative to the time in which the boiler is in the 'off' state.

The heating apparatus may be a radiator. The heating apparatus may be an underfloor system. The heating apparatus may be a warm air system. The radiator may be fluid-filled. The radiator may be liquid-filled. The radiator may be waterfilled.

The zone may be a zone from within a plurality of zones, each of the plurality of zones comprising a heating apparatus.

The use of multiple zones, and multiple heating apparatuses means that each zone can be controlled individually. Each zone can also be accounted for in a multi-zone system.

The step of receiving a heating demand signal may comprise receiving a heating demand signal from at least one other zone, and the step of deriving a boiler power output may comprise applying a summation function to the plurality of heating demand signals. The heating demand signals may have had the scaling factor applied prior to the summation function.

If the heating demand signal is in the units of kW, then the summation function may comprise summing the plurality of heating demand signals to arrive at a net heating demand. The net heating demand may be the boiler power output. The boiler power output may be expressed as a percentage of maximum power output of the boiler.

This is advantageous because even when the entire heating system is at maximum load, the net heating demand is still typically lower than the maximum power output of the boiler. In examples of the prior art, if individual zones within the system have a 100% demand for heat, the boiler will operate at its maximum output to reach the internal water temperature set-point as quickly as possible, which is significantly higher than actually necessary. The returns in terms of heating of the zone when operating above the optimal design rate diminishes significantly, and causes heat losses due to overshooting and frequent standby periods. In contrast, the summation of the heating demand signals, together with the use of a scaling factor, provides a more accurate representation of the net heating demand for the whole heating system. Therefore, the use of power output based on the summation of the heating demand signals provides a more reliable and accurate representation of the heating demands of the zones and enables the power output of the boiler to be adjusted to match the heating demands of the zones.

In a multi-zone system, the step of deriving the boiler power output may comprise applying a plurality of scaling factors to the plurality of heating demand signals, such that a scaling factor is individually applied to each heating demand signal.

Each zone may respond to different power outputs and external load factors differently. Therefore, the system may learn how the scaling factor changes uniquely for each zone in response to the same or different variations in other parameters (such as boiler power outputs, external temperature, room temperature, etc.) This again may provide a more accurate representation of the net heating demand of the zones, in contrast to the prior art, which merely looks at the 'worst case scenario' and controls the boiler on that basis.

The summation function may ensure that even if one of the heating demand signals is at its maximum, the overall heating demand may not be at its maximum if there are other heating demand signals that are less than their maxima. This means that the boiler may operate more efficiently. It may also ensure that the zones do not heat up too quickly, which may lead to inefficiencies in the system.

Each scaling factor may scale the heating demand signal of each zone such that it represents the size of the zone in relation to output of the boiler. The 'size of the zone' may not exclusively relate to the absolute physical size of the zone, but may relate to the rate of heat loss from the zone to its surroundings. The scaling factor may relate to the rate of heat loss from the zone to its surroundings, and the size of the zone, for example.

Advantageously, the scaling factor allows weighting of each of the heating demand signals. Weighting may be advantageous if, for example, one zone requires more heat input than another zone (it may be larger or have more windows for example), and therefore the heating apparatus in that zone may have a larger scaling factor than a heating apparatus in a zone that requires less heat input, for example. Weighting may also be advantageous if the heating apparatuses are different sizes, for example a larger heating apparatus may have a different scaling factor than a smaller heating apparatus. This is particularly advantageous over the prior art, where the boiler control does not know the relative scale of the heating demands of the zones.

In a multi-zone system, the steps of controlling the boiler may comprise setting a duty cycle of the boiler, the duty cycle being based on the overall heating demand; such that the power output of the boiler is representative of the net heating demand across all of the plurality of zones.

The net heating demand corresponds to the total power requirement from the boiler, and so the system can more efficiently modulate the firing rate of the boiler to match the power requirement of the system.

The step of measuring the rate of temperature increase may comprise measuring the rate of temperature increase under a plurality of different ambient conditions. Advantageously, the system can learn how the rate of temperature increase of the zone is affected by the ambient conditions, and thus adjust the scaling factor for the zone as a function of the ambient conditions. This further ensures that the system operates at design conditions accurately and quickly. The ambient conditions may comprise external temperature, or cloudiness, or season, or humidity for example.

The desired design rate of temperature increase may be pre-determined. The desired design rate of temperature increase may correspond to the type of heating apparatus present in the zone. The desired design rate of temperature increase may be an inherent feature of the heating apparatus, for example, a radiator may have a desired design rate of temperature increase of 3°C per hour for a zone. The desired design rate of temperature increase may have an upper and a lower bound.

The method may comprise the steps of: identifying the heating apparatus and selecting the desired design rate of temperature increase; and receiving an input of the desired design rate of temperature increase, the desired design rate of temperature increase being pre-determined based on the identification of the heating apparatus.

Advantageously, the desired design rate of temperature increase of the zone can be identified by the presence of a particular type of heating apparatus present within the zone. When the heating apparatus is a radiator, the desired design rate may be between 2.5°C and 3.5°C per hour. When the heating apparatus is an underfloor heater, the desired design rate may be between 0.5°C and 1.5°C per hour.

The present disclosure provides according to a second aspect, a heating system. The heating system comprises: a boiler; a zone, the zone comprising a heating apparatus; and a control system. The control system is configured to: receive a heating demand signal from the zone; derive a boiler power output based on the heating demand signal and also based on a scaling factor for the zone; and communicate an instruction to the boiler to generate the boiler power output. The scaling factor has been calculated based on the steps of: (i). measuring the rate of temperature increase in the zone under a plurality of different boiler power; and (ii). using the measurements in step (i), to learn the magnitude of the scaling factor to be applied to the boiler or achieving a desired design rate of temperature in the zone.

The present disclosure provides, according to a third aspect, a method of controlling a power output of a heating appliance to a zone. The method comprises the step of receiving a heating demand signal from the zone. The method also comprises the step of deriving the heating appliance power output based on the heating demand signal and also based on a scaling factor for the zone. The method further comprises the step of controlling the heating appliance to generate the heating appliance power output. The scaling factor has been calculated based on the steps of: (i) measuring the rate of temperature increase in the zone under a plurality of different heating appliance power outputs; and (ii) using the measurements in step (i), to learn the magnitude of the scaling factor for achieving a desired design rate of temperature increase in the zone.

The heating appliance may be an air heater. The heating appliance may be an immersion heater. The heating apparatus may be a boiler. The heating appliance may be located in the zone. The heating appliance may directly provide heat to the zone. The heating appliance may provide heat to a heating apparatus, the heating apparatus being located in the zone and configured to heat the zone.

It will of course be appreciated that features described in relation to one aspect of the present disclosure may be incorporated into other aspects of the present disclosure. For example, the apparatus of the present disclosure may incorporate any of the features described with reference to the method of the present disclosure and vice versa. The disclosure according to the third aspect may incorporate any of the features described herein in relation to the first aspect of the present disclosure, or the second aspect of the present disclosure.

### DESCRIPTION OF THE DRAWINGS

Embodiments of the present disclosure will now be described by way of example only with reference to the accompanying schematic drawings of which:
Figure 1 shows a schematic diagram of a method of controlling a power output of a boiler according to a first embodiment of the present disclosure;
Figure 2 shows a schematic diagram of a thermostat to the first embodiment of the present disclosure;
Figure 3 shows a schematic diagram of a method of calculating the scaling factor according to the first embodiment of the present disclosure
Figure 4 shows a schematic flow diagram of a method of controlling the power output of a boiler according to the first embodiment of the present disclosure;
Figure 5 shows a schematic flow diagram of a method of calculating the scaling factor according to the first embodiment of the present disclosure; and
Figure 6 shows a schematic diagram of a method of controlling a power output of a boiler according to a second embodiment of the present disclosure.

### DETAILED DESCRIPTION

The present disclosure will be more fully understood and further advantages will become apparent when reference is made to the following detailed description wherein like reference numerals denote similar elements.

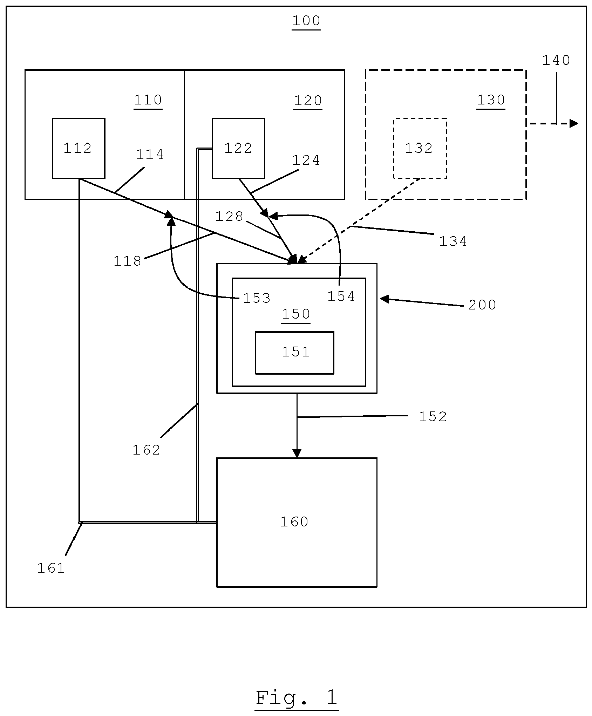

Figure 1 shows a schematic flow diagram of a method of controlling a power output of a boiler according to a first embodiment of the present disclosure. The heating system 100 comprises a plurality of zones 110, 120, 130, a control unit 150 located in a thermostat 200, and a boiler 160. The first zone 110 comprises a first heating apparatus 112, and the second zone 120 comprises a second heating apparatus 122. An additional zones arrow 140 indicates that there may be any number of additional zones 130. There may be 5, 10, 15, or 20 additional zones for example, or any number in between.

Since additional zone 130 is indicative that additional zones may be present, for the purposes of this embodiment it is assumed that only two zones are present. It will be understood that other embodiments can, of course, comprise more than two zones. The zoned heating system 100 in the first embodiment comprises the first zone 110 and the second zone 120. Each zone 110, 120 comprises their respective heating apparatuses 112, 122. Each heating apparatus is a hot water radiator. The first hot water radiator 112 is supplied with hot water from the boiler 160 by a first hot water pipe 161. The second hot water radiator 122 is supplied with hot water from the boiler 160 by a second hot water pipe 162.

In use, there is a temperature sensor (not shown) in each zone. If the temperature sensor senses that the temperature within the zone is below a temperature set point, then a signal indicating that heat is required is generated. The first hot water radiator 112 then sends a first heating demand signal 114 to the control unit 150. The second hot water radiator 122 also sends a second heating demand signal 124 to the control unit 150. Each hot water radiator 112, 122 comprises an electronic thermostatic radiator valve (TRV) (not shown) connected to a first and second hot water supply pipe 161, 162 respectively. The hot water supply pipes 161, 162 supply hot water from the boiler to the respective radiators. In embodiments, each of the additional heating apparatuses 132 would also send additional heating demand signals 134 to the control unit 150 were they to be part of the heating system 100.

Each heating demand signal 114, 124 is represented by a percentage demand. For example, if the radiator 112 is required to operate at maximum capacity, the heating demand signal 114 would be 100%. If the radiator 112 is only required to operate at half capacity to maintain the desired design rate of temperature increase in the zone 110, at design conditions, then the heating demand signal would be 50%.

In embodiments, the heating demand signal represents the demand of the zone. The scaling factor may represent the size of the zone in relation to the output of the boiler. The maximum value of the power demand for the heating apparatus may be the maximum power output of the heating apparatus. The percentage demand for each zone 110, 120 may be a percentage of the maximum output of the boiler 160. This is in contrast with the prior art, which may take the greatest demand from the plurality of zones and apply that greatest demand to the boiler in a 'worst case scenario' based approach. While this would ensure that there is always sufficient heat supplied from the boiler to the zones, this frequently leads to overshooting and overheating of zones, which is inefficient and consequentially results in greater heat losses.

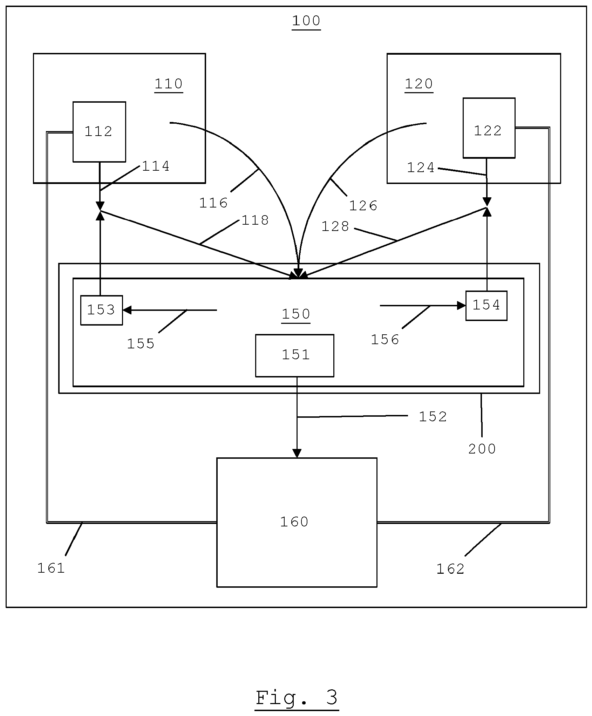

In embodiments of the present disclosure, the control unit 150 receives each of the heating demand signals 114, 124 and applies a scaling factor 153, 154 individually and respectively to each heating demand signal 114, 124. The method steps for calculating each scaling factor are described in more detail below, with reference to Figure 3.

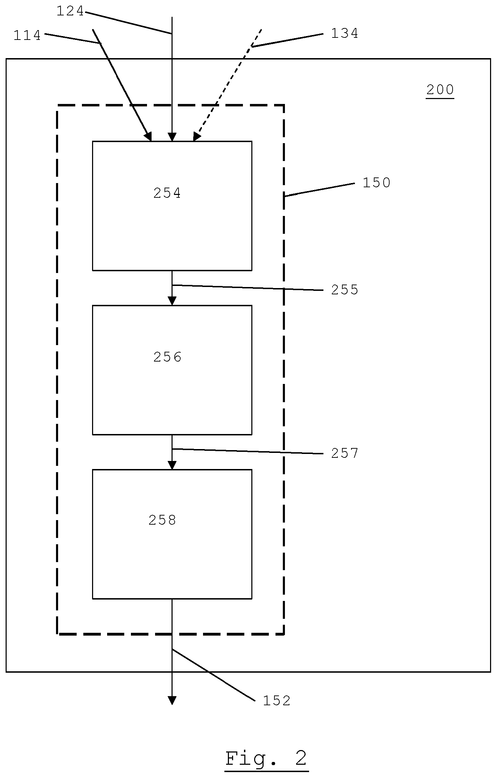

The control unit 150 is located within the thermostat 200. The control unit 150 derives a boiler power output 151 based on the heating demand signals 114, 124 and also based on the scaling factor 153, 154 for the respective zone. In order to derive the boiler output power 151, the control unit 150 applies a summation function to each of the scaled heating demand signals 118, 128. The scaling factor 153, 154 is introduced because operation of the heating system 100 is almost never at design conditions. For example, the size of the radiator may not be perfectly correct for the size of the room, at design conditions. The function of the control unit is described in more detail in relation to Figure 2.

The scaling factor 153, 154 represents the relative size of each zone 110, 120 to the boiler output. The term "size" does not only relate to the physical dimensions of each zone, but takes this into consideration and actually relates to the rate of heat loss from the zone to its surroundings. Therefore, the scaling factor represents the relative rates of heat loss from each zone to its surroundings. This scaling factor can be learnt by the temperature response of the room to a particular boiler power output. In essence, the rate of temperature rise of a zone in response to a particular boiler power output is indicative the rate of heat loss of the zone, and therefore the "size" of said zone presented by a scaling factor.

Since the scaling factor incorporates the size of the zone, it may only be necessary to perform a summation on the scaled heating demand signals to derive the boiler power output. In embodiments, the summation is followed by a division to create an averaging function.

The control unit 150 then converts the boiler power output 151 into a duty cycle setting 152, which is sent to the boiler 160. The boiler 160 then cycles between the "on" and "off" states at the set durations and frequency.

The boiler 160 is an on/off boiler, and the duty cycle comprises information for cycling between periods where the boiler is switched on, and periods where the boiler is switched off. The lengths of each of those periods are be based on the boiler power output 151. The boiler power outputs 151 corresponds to the overall heating demand. For example, in an embodiment of the present disclosure, the derived boiler output is 40%, so the boiler cycles between being on and off in a ratio of 40:60

Each time the zoned heating system 100 is activated to control the temperature within the zones 110, 120, new data is gathered with respect to the temperature response of the room in response to different boiler outputs. The control unit 150 stores and learns from the temperature response of the room in response to different boiler outputs such that the scaling factor 153, 154 can be adjusted to optimise the boiler power output 151 in response to the heating demand signal 114, 124.

For example, if the rate of temperature rise within the zone 110 was less than the desired design rate of temperature rise, then the control unit 150 would recognise that for those particular parameters the scaling factor was too small. The control unit 150 is then able to apply a larger scaling factor the next time that similar conditions or parameters arise within the heating system 100.

The control unit 150 is also able to use previous data relating to the rate of temperature rise in combination with variation in the varying parameters, and use this to accurately predict the required boiler power output in new, unknown conditions.

Figure 2 shows a schematic diagram of the thermostat 200 according to the first embodiment. The thermostat 200 comprises the control unit 150, which has a receiver 254, a processor 256, and a controller 258. The receiver 234 receives first heating demand signal 114 and a second heating demand signal 124 from the respective heating apparatuses 112, 122 (as shown in figure 1). Additional heating demand signal 134 represents the one or more heating demand signals that would be arriving from one or more additional zones (not shown).

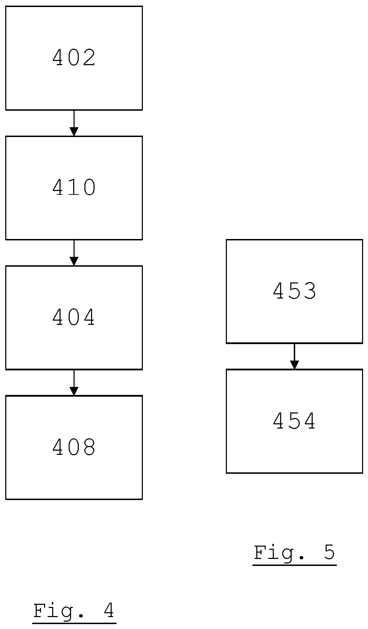

The receiver 254 then transmits the plurality of heating demand signals 255 to a processor 256. The processor calculates the boiler power output 257 based on the plurality of heating demand signals 255 and also based on a plurality of scaling factors. The calculation of the boiler power output is also at least based on a summation function. The method of control implemented by the control unit is described further in relation to figure 4.

The processor 256 then sends the boiler power output 257 to the controller 258. The controller 258 interprets the boiler power output 257 and converts it into a duty cycle setting 152 that is to be sent to the boiler 160 (as shown in figure 1).

Figure 3 shows a schematic diagram showing a method of calculating the scaling factor according to the first embodiment of the present disclosure. Similar features in Figure 3 compared to features of Figure 1 are denoted by the same reference numerals. The zoned heating system 100 comprises two zones 110, 120. Each zone 110, 120 includes a respective heating apparatus 112, 122. The heating apparatuses are radiators 112, 122.

Upon installation of the heating system 100, the heating apparatus 112, 122 is identified as a radiator and the desired design rate of temperature increase for the respective zone is selected. The desired design rate of temperature increase in this embodiment is approximately 3°C per hour for the identification of the radiator as the heating apparatus.

The first radiator 112 produces a first heating demand signal 114. The control unit 150 applies a first scaling factor 153 to the first heating demand signal 114, to produce a first scaled heating demand signal 118. Likewise, the second radiator 122 produces a second heating demand signal 124. The control unit also applies a second scaling factor 154 to the second heating demand signal 124, to produce a second scaled heating demand signal 128.

The first and second scaled heating demand signals 118, 128 are summed by the control unit 150 to produce the boiler power output 151. The boiler power output 151 is converted by the control unit 150 into a duty cycle setting 152 that is transmitted to the boiler 160. The boiler 160 receives the duty cycle setting 152 and modulates its ratio of time in the 'on' state to time in the 'off' state as instructed. Hot water is pumped from the boiler 160 to the first zone 110 and the first radiator 112 along a first hot water supply pipe 161. Hot water is also pumped from the boiler 160 to the second zone 120 and the second radiator 122 along a second hot water supply pipe 162.

While heat is being supplied to each zone 110, 120, each zone 110, 120 is also supplying the control unit 150 with the current rate of temperature increase in the zone 116, 126 respectively. The control unit 150 compares the current rate of temperature increase 116, 126 with the desired design rate of temperature increase (as mentioned above, for radiators 112, 122 the desired design rate of temperature increase is 3°C per hour). A function of the difference between the current rate of temperature increase and the design rate of temperature increase determines by how much the control unit 150 adjusts the respective scaling factors 153, 154. For example, if the first current rate of temperature increase was too low, the control unit 150 would provide a first scaling adjustment 155 that would increase the first scaling factor 153. As a further example, if the second current rate of temperature increase was too high, the control unit 150 would provide a second scaling adjustment 156 that would decrease the second scaling factor 154.

The control unit 150 documents and stores the data relating to the scaling factors, and the rates of temperature increase, for each of the zones and for each value of the boiler power output 151. In this way, the control unit 150 is able to learn the magnitude of the scaling adjustments 155, 156 to be made to the scaling factors 153, 154 in different situations. The control unit 150 is also able to use the stored and learned data to predict and learn which scaling factors 153, 154 to apply in new/unknown situations, based on the temperature response of the zones 110, 120 to other situations/parameters.

Figure 4 shows a schematic flow diagram of a method of controlling the power output of a boiler according to an embodiment of the present disclosure. The method begins with a receiving step 402 wherein a plurality of heating demand signals is received. In step 410, bespoke individual scaling factors are applied to each of the heating demand signals received in receiving step 402. Each of the scaling factors is learnt and determined as per the method described in Figure 3.

Step 404 is the derivation step. The derivation step 404 takes the scaled heating demand signals and derives the boiler power output. This is done by the application of a summation function. Each of the scaled heating demand signals are added together to arrive at the boiler power output, which is represented by a percentage. For example a first zone might have a heating demand signal of 100% and a second zone might have a heating demand signal of 50%. After scaling, the scaled heating demand of the first zone might be 75%, and the scaled heating demand of the second zone might be 12.5%. This scaling might be the case if the first zone lost heat at approximately three times the rate of the second zone, for example. The boiler power output in this instance would be 87.5%.

If, for example, the second zone lost heat at approximately three times the rate of the first zone, the scaled heating demand may be 25% for the first zone and 37.5% for the second zone. The boiler power output in this instance would be 62.5%.

The scaling does not only take the size/duty of the heating apparatus in each zone into account, but also takes into account environmental factors and room parameters such as the number of windows for example.

Step 408 is the instructing step. The instructing step 408 takes the boiler power output from the derivation step 404 and converts it to a duty cycle setting. The instructing step 408 converts the boiler power output from a percentage to a duty cycle setting in the form of a ratio of minutes in the 'on' state to minutes in the 'off' state.

Figure 5 shows a schematic flow diagram of a method of calculating a scaling factor according to the embodiment of Figure 3. Figure 5 illustrates the steps performed in Figure 3, in step-wise block-flow form.

Measuring step 453 measures the rate of temperature increase in the zone under a plurality of different power outputs.

Learning step 454 uses the measurements of measuring step 453 to learn the magnitude of the scaling factor to be applied for achieving a desired design rate of temperature increase in the zone.

The desired design rate of temperature increase in the zone is a fixed value. In this example, the heating apparatus in the zone is a hot water radiator, and so the desired design rate of temperature increase in the zone tends to be at or around 3°C.

In the measuring step 453, the boiler power output is measured or known, and the rate of temperature increase in the zone is also measured. The boiler power output may be measured in kilowatts. The boiler power output may be the desired boiler power output in the form of a percentage, prior to conversion into a duty cycle, but after the application of a scaling factor. The learning step 454 takes the information from the measuring step 453 and learns the appropriate scaling factor to apply, to achieve the desired design rate of temperature increase in the zone. As mentioned above, more detail on the learning process is described with reference to Figure 3.

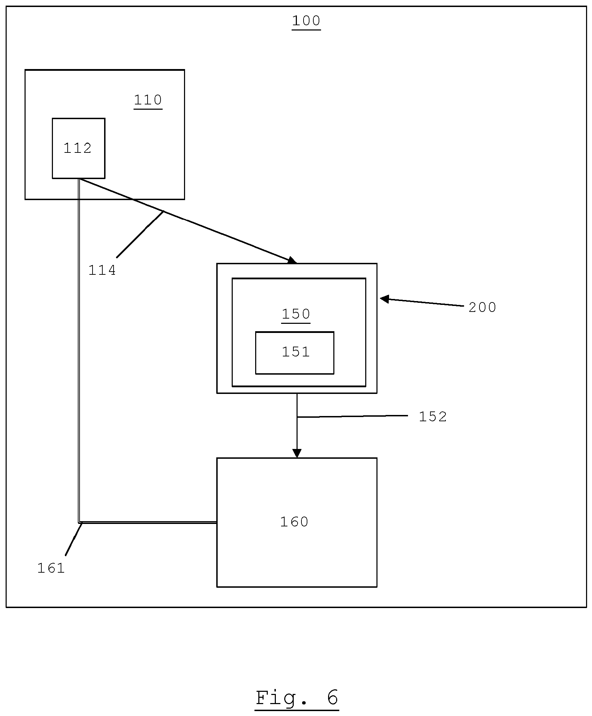

Figure 6 shows a schematic flow diagram of a method of controlling the power output of a boiler according to a second embodiment of the present disclosure. In this embodiment, the zoned heating system 100 comprises a singular zone 110, a control unit 150 located in a thermostat 200, and a boiler 160. Singular zone 110 comprises a heating apparatus 112. The method of the second embodiment is the same as the first embodiment, except for the fact that there is only a singular zone 110. This means that there is no requirement for a summation, or averaging, function.

In the method of figure 6, the heating apparatus 112 sends a heating demand signal 114 from the zone 110 to a control unit 150. The heating apparatus 112 is a hot water radiator and comprises a thermostatic radiator valve (TRV) (not shown) connected to a hot water supply pipe 161, which supplies hot water from the boiler 162 the radiator 112.

The control unit 150 is located within the thermostat 200 and functions in a similar manner to the control unit of the first embodiment. The control unit 150 converts the boiler power output 151 into a duty cycle setting 152, which is sent to the boiler 160. The boiler 160 then cycles between the "on" and "off" states at the set durations and frequency.

It should be noted that throughout this specification, "or" should be interpreted as "and/or".

## Claims

1. A method of controlling a power output of a heating appliance to a zone,
wherein the method comprises the steps of:
a. receiving a heating demand signal from the zone;
b. deriving the heating appliance power output based on the heating demand signal and also based on a scaling factor for the zone; and
c. controlling the heating appliance to generate the heating appliance power output, wherein the scaling factor has been calculated based on the steps of:
i. measuring the rate of temperature increase in the zone under a plurality of different heating appliance power outputs;
ii. using the measurements in step (i), to learn the magnitude of the scaling factor for achieving a desired design rate of temperature increase in the zone.

2. A method as claimed in claim 1, wherein the heating appliance is an on/off boiler (160) to a heating apparatus (112, 122) located in the zone (110, 120), wherein the method comprises the steps of:
a. receiving (402) the heating demand signal (114, 124) from the zone;
b. deriving (404) the boiler power output based on the heating demand signal and also based on the scaling factor (153, 154) for the zone; and
c. controlling (408) the boiler to generate the boiler power output,
wherein the scaling factor has been calculated based on the steps of:
i. measuring (453) the rate of temperature increase in the zone under the plurality of different boiler power outputs;
ii. using (454) the measurements in step (i), to learn the magnitude of the scaling factor for achieving the desired design rate of temperature increase in the zone.

3. A method as claimed in claim 2, wherein the heating apparatus is a radiator.

4. A method as claimed in any of claims 2 or 3, wherein the step of controlling the boiler comprises setting a duty cycle of the boiler.

5. A method as claimed in any of claims 2 to 4, wherein the zone is a zone from within a plurality of zones, each of the plurality of zones comprising a heating apparatus.

6. A method as claimed in claim 5, wherein the step of receiving a heating demand signal comprises receiving a heating demand signal from at least one other zone, and wherein the step of deriving a boiler power output comprises applying a summation function to the plurality of heating demand signals.

7. A method as claimed in claim 6, wherein the step of deriving the boiler power output comprises:
applying a plurality of scaling factors to the plurality of heating demand signals;
such that a scaling factor is individually applied to each heating demand signal.

8. A method as claimed in claim 7 wherein each scaling factor of the plurality of scaling factors has been calculated based on the steps of:
i. measuring the rate of temperature increase in each zone of the plurality of zones under a plurality of different boiler power outputs;
ii. using the measurements in step (i), to learn the magnitude of each scaling factor of the plurality of scaling factors for achieving a desired design rate of temperature increase in each of the respective zones.

9. A method as claimed in any of claims 5 to 8, wherein the step of controlling the boiler comprises setting a duty cycle of the boiler, the duty cycle being based on the overall heating demand; such that the power output of the boiler is representative of the net heating demand across all of the plurality of zones.

10. A method as claimed in any of claims 2 to 9, wherein the step of measuring the rate of temperature increase comprises measuring the rate of temperature increase under a plurality of different ambient conditions.

11. A method as claimed in any of claims 2 to 10, wherein the desired design rate of temperature increase is pre-determined.

12. A method as claimed in claim 11, wherein the method comprises the steps of:
identifying the heating apparatus and selecting the desired design rate of temperature increase; and
receiving an input of the desired design rate of temperature increase, the desired design rate of temperature increase being pre-determined based on the identification of the heating apparatus.

13. A method as claimed in any of claims 11 or 12, wherein when the heating apparatus is a radiator, the desired design rate of temperature increase is between 2.5°C and 3.5°C per hour.

14. A heating system (100), the system comprising:
an on/off boiler;
a zone (110, 120), the zone comprising a heating apparatus (112, 122); and
a control system;
wherein the control system is configured to:
receive a heating demand signal from the zone;
derive a boiler power output based on the heating demand signal and
also based on a scaling factor for the zone; and
communicate an instruction to the boiler to generate the boiler power output,
wherein the heating system comprises means for calculating the scaling factor based on the steps of:
i. measuring the rate of temperature increase in the zone under a plurality of different boiler power outputs;
ii. using the measurements in step (i), to learn the magnitude of the scaling factor to be applied to the boiler power output, for achieving a desired design rate of temperature increase in the zone.

## Patentansprüche

1. Ein Verfahren zum Steuern einer Leistungsabgabe eines Heizgeräts an einen Bereich, wobei das Verfahren die folgenden Schritte beinhaltet:
a. Empfangen eines Heizanforderungssignals von dem Bereich;
b. Ableiten der Leistungsabgabe des Heizgeräts basierend auf dem Heizanforderungssignal und ebenfalls basierend auf einem Skalierungsfaktor für den Bereich; und
c. Steuern des Heizgeräts, um die Leistungsabgabe des Heizgeräts zu erzeugen, wobei der Skalierungsfaktor basierend auf den folgenden Schritten berechnet worden ist:
i. Messen der Rate der Temperaturerhöhung in dem Bereich unter einer Vielzahl von unterschiedlichen Leistungsabgaben des Heizgeräts;
ii. Verwenden der Messungen in Schritt (i), um die Größenordnung des Skalierungsfaktors zu ermitteln, um eine gewünschte Auslegungsrate der Temperaturerhöhung in dem Bereich zu erreichen.

2. Verfahren gemäß Anspruch 1, wobei das Heizgerät ein Ein-Aus-Boiler (160) zu einer in dem Bereich (110, 120) angeordneten Heizvorrichtung (112, 122) ist, wobei das Verfahren die folgenden Schritte beinhaltet:
a. Empfangen (402) des Heizanforderungssignals (114, 124) von dem Bereich;
b. Ableiten (404) der Leistungsabgabe des Boilers basierend auf dem Heizanforderungssignal und ebenfalls basierend auf dem Skalierungsfaktor (153, 154) für den Bereich; und
c. Steuern (408) des Boilers, um die Leistungsabgabe des Boilers zu erzeugen, wobei der Skalierungsfaktor basierend auf den folgenden Schritten berechnet worden ist:
i. Messen (453) der Rate der Temperaturerhöhung in dem Bereich unter der Vielzahl von unterschiedlichen Leistungsabgaben des Boilers;
ii. Verwenden (454) der Messungen in Schritt (i), um die Größenordnung des Skalierungsfaktors zu ermitteln, um die gewünschte Entwurfsrate der Temperaturerhöhung in dem Bereich zu erreichen.

3. Verfahren gemäß Anspruch 2, wobei die Heizvorrichtung ein Radiator ist.

4. Verfahren gemäß einem der Ansprüche 2 oder 3, wobei der Schritt des Steuerns des Boilers das Festsetzen einer Einschaltdauer des Boilers beinhaltet.

5. Verfahren gemäß einem der Ansprüche 2 bis 4, wobei der Bereich ein Bereich von innerhalb einer Vielzahl von Bereichen ist, wobei jeder der Vielzahl von Bereichen eine Heizvorrichtung beinhaltet.

6. Verfahren gemäß Anspruch 5, wobei der Schritt des Empfangens eines Heizanforderungssignals das Empfangen eines Heizanforderungssignals von mindestens einem anderen Bereich beinhaltet, und wobei der Schritt des Ableitens einer Leistungsabgabe des Boilers das Anwenden einer Summenfunktion auf die Vielzahl von Heizanforderungssignalen beinhaltet.

7. Verfahren gemäß Anspruch 6, wobei der Schritt des Ableitens der Leistungsabgabe des Boilers Folgendes beinhaltet:
Anwenden einer Vielzahl von Skalierungsfaktoren auf die Vielzahl von Heizanforderungssignalen;
sodass ein Skalierungsfaktor individuell auf jedes Heizanforderungssignal angewendet wird.

8. Verfahren gemäß Anspruch 7, wobei jeder Skalierungsfaktor der Vielzahl von Skalierungsfaktoren basierend auf den folgenden Schritten berechnet worden ist:
i. Messen der Rate der Temperaturerhöhung in jedem Bereich der Vielzahl von Bereichen unter einer Vielzahl von unterschiedlichen Leistungsabgaben des Boilers;
ii. Verwenden der Messungen in Schritt (i), um die Größenordnung jedes Skalierungsfaktors der Vielzahl von Skalierungsfaktoren zu ermitteln, um eine gewünschte Entwurfsrate von Temperaturerhöhung in jedem der entsprechenden Bereiche zu erreichen.

9. Verfahren gemäß einem der Ansprüche 5 bis 8, wobei der Schritt des Steuerns des Boilers das Festsetzen einer Einschaltdauer des Boilers beinhaltet, wobei die Einschaltdauer auf der gesamten Heizanforderung basiert, sodass die Leistungsabgabe des Boilers repräsentativ für das Nettoheizerfordernis über alle der Vielzahl von Bereichen ist.

10. Verfahren gemäß einem der Ansprüche 2 bis 9, wobei der Schritt des Messens der Rate der Temperaturerhöhung das Messen der Rate von Temperaturerhöhung unter einer Vielzahl von unterschiedlichen Umgebungsbedingungen beinhaltet.

11. Verfahren gemäß einem der Ansprüche 2 bis 10, wobei die gewünschte Entwurfsrate der Temperaturerhöhung vorbestimmt ist.

12. Verfahren gemäß Anspruch 11, wobei das Verfahren die folgenden Schritte beinhaltet:
Identifizieren der Heizvorrichtung und Auswählen der gewünschten Entwurfsrate der Temperaturerhöhung; und
Empfangen einer Eingabe der gewünschten Entwurfsrate der Temperaturerhöhung, wobei die gewünschte Entwurfsrate der Temperaturerhöhung basierend auf der Identifikation der Heizvorrichtung vorbestimmt ist.

13. Verfahren gemäß Anspruch 11 oder 12, wobei, wenn die Heizvorrichtung ein Radiator ist, die gewünschte Entwurfsrate der Temperaturerhöhung zwischen 2,5 °C und 3,5 °C pro Stunde liegt.

14. Ein Heizsystem (100), wobei das System Folgendes beinhaltet:
einen Ein-Aus-Boiler;
einen Bereich (110, 120), wobei der Bereich eine Heizvorrichtung (112, 122) beinhaltet; und
ein Steuerungssystem;
wobei das Steuerungssystem für Folgendes konfiguriert ist:
Empfangen eines Heizanforderungssignals von dem Bereich;
Ableiten einer Leistungsabgabe des Boilers basierend auf dem Heizanforderungssignal und
ebenfalls basierend auf einem Skalierungsfaktor für den Bereich; und
Kommunizieren einer Anweisung an den Boiler, um die Leistungsabgabe des Boilers zu erzeugen,
wobei das Heizsystem Mittel zum Berechnen des Skalierungsfaktors basierend auf den folgenden Schritten beinhaltet:
i. Messen der Rate der Temperaturerhöhung in dem Bereich unter einer Vielzahl von unterschiedlichen Leistungsabgaben des Boilers;
ii. Verwenden der Messungen in Schritt (i), um die Größenordnung des Skalierungsfaktors zu ermitteln, die auf die Leistungsabgabe des Boilers angewendet werden muss, um eine gewünschte Entwurfsrate von Temperaturerhöhung in dem Bereich zu erreichen.

## Revendications

1. Une méthode de contrôle d'une puissance de sortie d'un dispositif de chauffage vers une zone, où la méthode comprend les étapes consistant à :
a. recevoir un signal de demande de chauffage en provenance de la zone ;
b. dériver la puissance de sortie de dispositif de chauffage sur la base du signal de demande de chauffage et également sur la base d'un facteur d'échelle pour la zone ; et
c. contrôler le dispositif de chauffage pour générer la puissance de sortie de dispositif de chauffage,
où le facteur d'échelle a été calculé sur la base des étapes consistant à :
i. mesurer la vitesse d'augmentation de température dans la zone sous une pluralité de puissances de sortie de dispositif de chauffage différentes ;
ii. utiliser les mesures de l'étape (i), pour apprendre l'ordre de grandeur du facteur d'échelle permettant d'obtenir une vitesse d'augmentation de température nominale souhaitée dans la zone.

2. Une méthode telle que revendiquée dans la revendication 1, où le dispositif de chauffage est une chaudière marche/arrêt (160) vers un appareil de chauffage (112, 122) situé dans la zone (110, 120), où la méthode comprend les étapes consistant à :
a. recevoir (402) le signal de demande de chauffage (114, 124) en provenance de la zone ;
b. dériver (404) la puissance de sortie de chaudière sur la base du signal de demande de chauffage et également sur la base du facteur d'échelle (153, 154) pour la zone ; et
c. contrôler (408) la chaudière pour générer la puissance de sortie de chaudière, où le facteur d'échelle a été calculé sur la base des étapes consistant à :
i. mesurer (453) la vitesse d'augmentation de température dans la zone sous la pluralité de puissances de sortie de chaudière différentes ;
ii. utiliser (454) les mesures de l'étape (i), pour apprendre l'ordre de grandeur du facteur d'échelle permettant d'obtenir la vitesse d'augmentation de température nominale souhaitée dans la zone.

3. Une méthode telle que revendiquée dans la revendication 2, où l'appareil de chauffage est un radiateur.

4. Une méthode telle que revendiquée dans n'importe lesquelles des revendications 2 ou 3, où l'étape consistant à contrôler la chaudière comprend le fait de régler un cycle de service de la chaudière.

5. Une méthode telle que revendiquée dans n'importe lesquelles des revendications 2 à 4, où la zone est une zone prise au sein d'une pluralité de zones, chaque zone de la pluralité de zones comprenant un appareil de chauffage.

6. Une méthode telle que revendiquée dans la revendication 5, où l'étape consistant à recevoir un signal de demande de chauffage comprend le fait de recevoir un signal de demande de chauffage en provenance d'au moins une autre zone, et où l'étape consistant à dériver une puissance de sortie de chaudière comprend le fait d'appliquer une fonction de sommation à la pluralité de signaux de demande de chauffage.

7. Une méthode telle que revendiquée dans la revendication 6, où l'étape consistant à dériver la puissance de sortie de chaudière comprend :
le fait d'appliquer une pluralité de facteurs d'échelle à la pluralité de signaux de demande de chauffage ;
de sorte qu'un facteur d'échelle est appliqué individuellement à chaque signal de demande de chauffage.

8. Une méthode telle que revendiquée dans la revendication 7 où chaque facteur d'échelle de la pluralité de facteurs d'échelle a été calculé sur la base des étapes consistant à :
i. mesurer la vitesse d'augmentation de température dans chaque zone de la pluralité de zones sous une pluralité de puissances de sortie de chaudière différentes ;
ii. utiliser les mesures de l'étape (i), pour apprendre l'ordre de grandeur de chaque facteur d'échelle de la pluralité de facteurs d'échelle permettant d'obtenir la vitesse d'augmentation de température nominale souhaitée dans chacune des zones respectives.

9. Une méthode telle que revendiquée dans n'importe lesquelles des revendications 5 à 8, où l'étape consistant à contrôler la chaudière comprend le fait de régler un cycle de service de la chaudière, le cycle de service étant basé sur la demande de chauffage globale ; de sorte que la puissance de sortie de la chaudière est représentative de la demande de chauffage nette sur toutes les zones de la pluralité de zones.

10. Une méthode telle que revendiquée dans n'importe lesquelles des revendications 2 à 9, où l'étape consistant à mesurer la vitesse d'augmentation de température comprend le fait de mesurer la vitesse d'augmentation de température sous une pluralité de conditions ambiantes différentes.

11. Une méthode telle que revendiquée dans n'importe lesquelles des revendications 2 à 10, où la vitesse d'augmentation de température nominale souhaitée est prédéterminée.

12. Une méthode telle que revendiquée dans la revendication 11, où la méthode comprend les étapes consistant à :
identifier l'appareil de chauffage et sélectionner la vitesse d'augmentation de température nominale souhaitée ; et
recevoir une entrée de la vitesse d'augmentation de température nominale souhaitée, la vitesse d'augmentation de température nominale souhaitée étant prédéterminée sur la base de l'identification de l'appareil de chauffage.

13. Une méthode telle que revendiquée dans n'importe lesquelles des revendications 11 ou 12, où lorsque l'appareil de chauffage est un radiateur, la vitesse d'augmentation de température nominale souhaitée est comprise entre 2,5 °C et 3,5 °C par heure.

14. Un système de chauffage (100), le système comprenant :
une chaudière marche/arrêt ;
une zone (110, 120), la zone comprenant un appareil de chauffage (112, 122) ; et
un système de contrôle ;
où le système de contrôle est configuré pour :
recevoir un signal de demande de chauffage en provenance de la zone ;
dériver une puissance de sortie de chaudière sur la base du signal de demande de chauffage et également sur la base d'un facteur d'échelle pour la zone ; et
communiquer une instruction à la chaudière pour générer la puissance de sortie de chaudière,
où le système de chauffage comprend des moyens pour calculer le facteur d'échelle sur la base des étapes consistant à :
i. mesurer la vitesse d'augmentation de température dans la zone sous une pluralité de puissances de sortie de chaudière différentes ;
ii. utiliser les mesures de l'étape (i), pour apprendre l'ordre de grandeur du facteur d'échelle à appliquer à la puissance de sortie de chaudière, pour obtenir une vitesse d'augmentation de température nominale souhaitée dans la zone.
